# EUROPÄISCHE PATENTSCHRIFT

(11) **EP 0 508 941 B1**
(45) Veröffentlichungstag und Bekanntmachung des Hinweises auf die Patenterteilung: **19.04.1995**
(21) Anmeldenummer: 92810107.0
(22) Anmeldetag: 17.02.1992
(51) Int. Cl.: C23C 30/00, B24D 3/04, B24D 3/10

(54) **Werkzeug zur Zerspanung von Werkstoffen**
Tool for machining of materials
Outil pour l'usinage de matériaux

(30) Priorität: 08.04.1991 DE 4111238
(43) Veröffentlichungstag der Anmeldung: 14.10.1992
(73) Patentinhaber: HILTI Aktiengesellschaft, 9494 Schaan (LI)
(72) Erfinder: Stöck, Maximilian, Ch-9478 Azmoos (CH)
(74) Vertreter: Wildi, Roland

(56) Entgegenhaltungen:
- EP-A- 0 264 024
- EP-A- 0 298 729
- EP-A- 0 403 461
- EP-B- 0 083 843
- AT-B- 376 160
- DE-A- 3 539 729
- DE-A- 3 620 901
- US-A- 4 606 738

## Beschreibung

Die Erfindung betrifft ein Werkzeug mit Trägerkörper enthaltend eine diamantartige Schicht.

Bei Werkzeugen, die dem Zerspanen von Werkstoffen unterschiedlicher Art wie Holz, Gestein, Metallegierungen und dergleichen dienen, ist es bekannt, einen Trägerkörper mit Hartmetallkörpern zu versehen. Bei den Werkzeugen kann es sich um Fräs-, Bohr-, Dreh oder Meisselwerkzeuge handeln, wobei die Trägerkörper jeweils eine entsprechend abgestimmte Form aufweisen. Die Hartmetallkörper können je nach Anwendungsfall beispielsweise über Lötverbindungen mit den jeweils massgebenden Stirnseiten der Trägerkörper verbunden sein.

Zur Erhöhung der Verschleissfestigkeit ist es beispielsweise aus der EP-A-0 306 077 bekannt, den Hartmetallkörper mit einer oder mehrerer Schichten aus Metall-Bornitrid zu versehen, wobei die Borkonzentration unter einem bestimmten Wert gehalten wird. Die Schichten wirken dabei als eine Art Diffusionssperre. Dabei ist wesentlich, dass die Härte der aufgetragenen Schicht härter ist als das darunter liegende Hartmetall, was dazu führt, dass die Schicht auch selbsttragend sein muss. Um dieser selbsttragenden Eigenschaft ausreichend nachzukommen, muss die Schicht eine relativ grosse Dicke im Bereich von 1 bis 10 Mikrometer aufweisen. Diese grosse Dicke ist mit Eigenspannung verbunden, weshalb die Schicht anfällig auf Bruch und Rissbildung ist, was insbesondere durch Nachgeben der weicheren Unterlage gefördert wird.

Insbesondere aus der Sicht der hohen Anforderungen hinsichtlich Verschleissfestigkeit sind auf dem Gebiet der Zerspanung von Holz, Aluminiumlegierungen, Gestein und dergleichen vermehrt mit einer diamantartigen Schicht versehene Werkzeuge bekannt geworden. Bei diesen Werkzeugen handelt es sich wiederum um einen Trägerkörper, der entsprechend dem Anwendungsfall ausgebildet ist.

Die diamantartige Schicht kann in verschiedenartiger Weise vorliegen. So kann sie beispielsweise mittels den bekannten PVD- oder CVD-Verfahren auf den Trägerkörper aufgebracht werden. Darüber hinaus besteht die Möglichkeit, Diamantkörner einzeln, beispielsweise mittels Löten oder einem galvanischen Verfahren auf dem Trägerkörper anzuordnen. Verbreitet sind aber vor allem auf dem Trägerkörper beispielsweise aufgelötete polykristalline Diamantplättchen, wobei diese polykristallinen Diamantplättchen einen Hartmetallgrundkörper aufweisen, welcher die Diamantkörner im Verbund oder als Diamantschicht aufweist.

Während hinsichtlich Verschleissfestigkeit diamantartige Schichten bei den vorgenannten Anwendungsfällen grosse Vorteile bringen, besteht der Nachteil darin, dass damit Eisenlegierungen nicht bearbeitet werden können. Im Falle der Bearbeitung von Eisenlegierungen tritt eine Wechselwirkung zwischen der diamantartigen Schicht als Kohlenstoff und dem Eisen derart auf, dass ein chemischer Verschleiss der Schicht stattfindet. Eine solche Wechselwirkung kann beispielsweise dann eintreten, wenn Beton mit Eisenarmierungen bearbeitet werden muss und ein mit einer solchen diamantartigen Schicht versehenes Werkzeug auf die Eisenarmierungen trifft. Da mit solchen Eisenarmierungen in den meisten aus Beton bestehenden Bauteilen zu rechnen ist, können mit diamantartigen Schichten versehene Werkzeuge für solche Fälle nicht eingesetzt werden.

Aus der EP-A 0 264 024 ist ein Diamantpressling bekannt, welcher gegen Oxydation beschichtet ist. Die Schicht besteht beispielsweise aus Titan-Karbid oder Titan-Nitrid. Um den Anforderungen hinsichtlich Schutz gegen Oxydation nachzukommen, ist es erforderlich, die Schicht relativ dick auszubilden. So beträgt die Schichtdicke vorzugsweise 8 bis 30 Mikrometer, was wiederum zu der bereits geschilderten Problematik des Hervorrufens grosser Eigenspannungen mit der damit verbundenen Anfälligkeit auf Bruch führt.

Der Erfindung liegt die Aufgabe zugrunde, ein auf der Verwendung diamantartiger Schichten aufgebautes Werkzeug zu schaffen, mit welchem sich auch Eisenlegierungen bzw. mit Eisenlegierungen versetzte Werkstoffe zerspanen lassen, ohne dass schädliche Einflüsse auf die diamantartige Schicht einwirken.

Erfindungsgemäss wird die Aufgabe dadurch gelöst, dass zumindest die diamantartige Schicht mit einer als Kohlenstoff-Diffusionsbarriere wirkenden 0,1 bis 1 Mikrometer dicken Hartstoffschicht aus Metall-Nitriden, Metalloxyden oder Metall-Karbiden überzogen ist.

Wird ein Werkzeug mit einer diamantartigen Schicht, die in der vorgenannten Weise bearbeitet ist, zum Zerspanen von Eisenlegierungen eingesetzt, bildet die Hartstoffschicht eine Diffusionsbarriere. Dank dieser Diffusionsbarriere findet keine Wechselwirkung zwischen der diamantartigen Schicht und der Eisenlegierung statt, so dass der nachteilig geschilderte chemische Verschleiss ausbleibt. Da als Unterlage für die Hartstoffschicht die diamantartige Schicht mit ihrer ausserordentlich hohen Härte dient, muss die Hartstoffschicht nicht selbsttragend sein, so dass deren Dicke sehr dünn gewählt werden kann (im Bereich von 0,1 bis 1 Mikrometer). Dank dieser ausserordentlich dünnen Hartstoffschicht treten nur geringe Eigenspannungen auf, so dass eine Rissbildung, wie sie bei dickeren Schichten auftreten würde, vermieden wird. Aufgrund des Ausbleibens der Wechselwirkung zwischen diamantartiger Schicht und Eisen sinkt ferner der Reibkoeffizient, was das "Fliessen" der "Späne" fördert.

An sich reicht es aus, wenn nur die diamantartige Schicht des Werkzeuges mit der Hartstoffschicht überzogen ist. Je nach Verfahren, das zum Aufbringen der Hartstoffschicht verwendet wird, können auch weitere Teile des Werkzeuges, beispielsweise bei Verwendung polykristalliner Diamantplättchen auch ein Teil des Hartmetallgrundkörpers mit der Hartstoffschicht überzogen sein. Solche ganz oder nur teilweise mit der Hartstoffschicht versehene polykristalline Diamantplättchen werden vorzugsweise mittels Löten mit dem Trägerkörper verbunden, wobei gegebenenfalls am Trägerkörper auf das Plättchen abgestimmte Ausnehmungen vorhanden sein können.

Als Hartstoffschicht kommen Metall-Nitride, Metalloxyde oder Metall-Karbide in Betracht. Alle derart aufgebauten Schichten führen zu einer ausreichenden Diffusionsbarriere. Die Verwendung von Metall-Karbiden führt nebst der Bildung einer Diffusionsbarriere zusätzlich zu einer Erhöhung der Härte der Hartstoffschicht.

Als Metall-Nitride wirken sich insbesondere Titan-Nitride vorteilhaft aus.

Insbesondere aus wirtschaftlichen Überlegungen bieten sich Aluminiumoxyde in bevorzugter Weise an.

Insbesondere aus der Sicht der Erzielung einer hohen Härte wirkt sich die Verwendung von Titankarbiden vorteilhaft aus.

Der sich aus den vorgenannten Zusammensetzungsbeispielen ergebende überstöchiometrische Kohlenstoffgehalt der Hartstoffschicht wirkt sich weiterhin ähnlich einem Schmierstoff aus, so dass auch dadurch der Reibungskoeffizient zwischen dem Werkzeug und dem zu bearbeitenden Werkstoff herabgesetzt wird.

Die Erfindung wird nachstehend in beispielhafter Form erläutert. Es zeigen:
- Fig. 1: eine Ansicht eines Werkzeuges in Form eines Dosensenkers mit polykristallinen Diamantplättchen;
- Fig. 2: eine Ansicht des Werkzeuges der Fig. 1 in Richtung A;
- Fig. 3: die Anordnung eines Diamantplättchens entsprechend Fig. 1 in vergrösserter Darstellung.

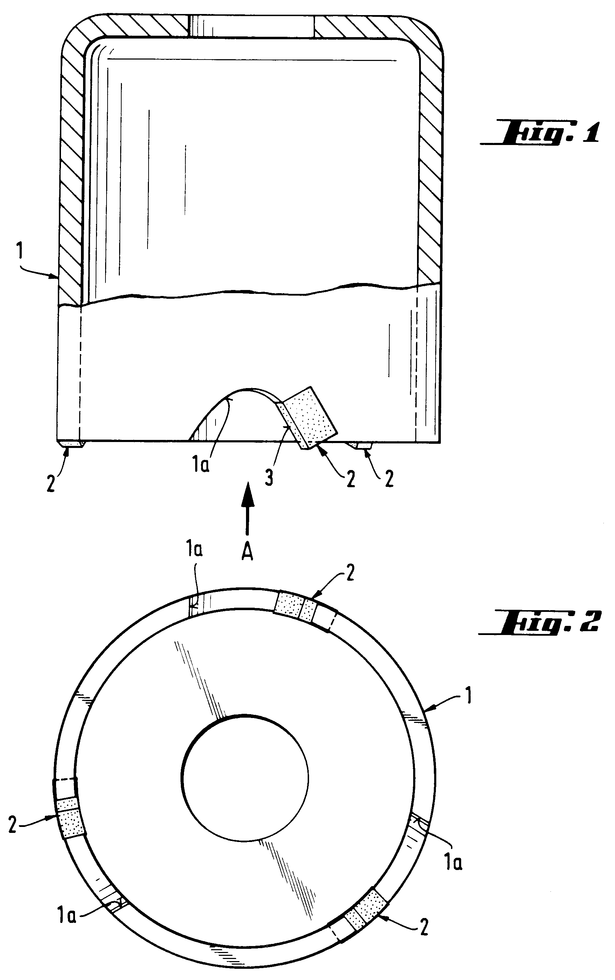

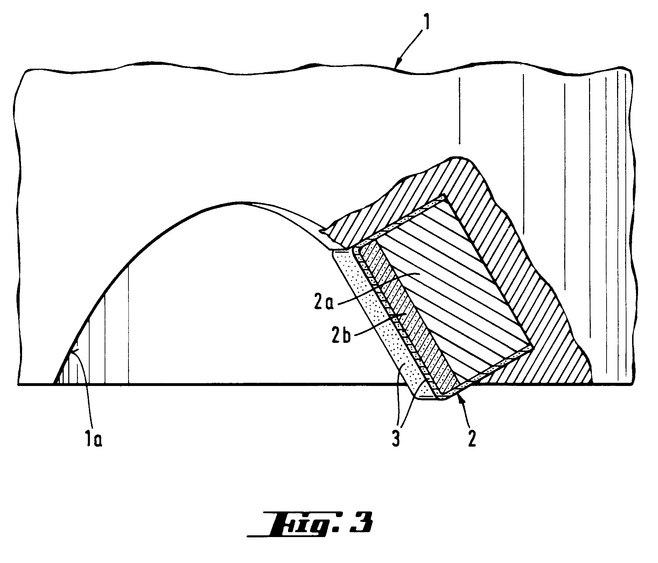

Aus den Figuren 1 und 2 ist ein als Dosensenker ausgebildetes Werkzeug ersichtlich. Dieses Werkzeug besteht aus einem Trägerkörper 1, welcher stirnseitig Aussparungen 1a aufweist, innerhalb welcher in Drehrichtung zugewandt polykristalline Diamantplättchen 2 angeordnet sind. Wie insbesondere Figur 2 zeigt, sind beispielhaft über den Umfang gleichmässig verteilt drei polykristalline Diamantplättchen 2 vorgesehen.

Figur 3 zeigt einen vergrösserten Ausschnitt des Trägerkörpers 1 mit Aussparung 1a und im Trägerkörper 1 eingelassenem polykristallinen Diamantplättchen 2. Wie die Figur 3 ferner zeigt, besteht das polykristalline Diamantplättchen 2 aus einem Hartmetallgrundkörper 2a und einer diamantartigen Schicht 2b. Die diamantartige Schicht 2b ist an der in Drehrichtung zugewandten Seite am Hartmetallgrundkörper 2a angeordnet. Die diamantartige Schicht 2b und ein Teil des Hartmetallgrundkörpers 2a sind mit einer Hartstoffschicht 3 überzogen.

Die in der Figur 3 gezeigte Anordnung der Hartstoffschicht 3 soll nur ein Beispiel darstellen. An sich genügt es, wenn nur die diamantartige Schicht 2b von der Hartstoffschicht 3 überzogen ist. Je nach Herstellungsvorgang kann aber auch das gesamte polykristalline Diamantplättchen 2 von der Hartstoffschicht 3 überzogen sein.

Während die Dicke der diamantartigen Schicht 2b etwa 0,7 mm betragen kann, beträgt die Dicke der Hartstoffschicht 0,1 bis 1 Mikrometer.

## Patentansprüche

1. Werkzeug mit Trägerkörper (1) enthalend eine diamantartige Schicht (2b), **dadurch gekennzeichnet,** dass zumindest die diamantartige Schicht (2b) mit einer als Kohlenstoff-Diffusionsbarriere wirkenden 0,1 bis 1 Mikrometer dicken Hartstoffschicht (3) aus Metall-Nitriden, Metalloxyden oder Metall-Karbiden überzogen ist.

2. Werkzeug nach Anspruch 1, dadurch gekennzeichnet, dass die Metall-Nitride Titan-Nitride sind.

3. Werkzeug nach Anspruch 1, dadurch gekennzeichent, dass die Metalloxyde Aluminiumoxyde sind.

4. Werkzeug nach Anspruch 1, dadurch gekennzeichnet, dass die Metall-Karbide Titan-Karbide sind.

## Claims

1. A tool comprising a carrier element (1) containing a diamondlike layer (2b), **characterized in that** at least the diamondlike layer (2b), which serves as a carbon-diffusion barrier and which is between 0.1 and 1 micrometer thick, is coated with a hard material layer (3) of metal nitrides, metal oxides or metal carbides

2. A tool according to claim 1, **characterized in that** the metal-nitrides are titanium nitrides.

3. A tool according to claim 1, **characterized in that** the metal oxides are aluminium oxides.

4. A tool according to claim 1, **characterized in that** the metal carbides are titanium carbides.

## Revendications

1. Outil avec un corps-support (1) contenant une couche diamantée (2b), caractérisé en ce qu'au moins la couche diamantée (2b) est revêtue d'une couche de substance dure en nitrures métalliques, oxydes métalliques ou carbures métalliques, d'une épaisseur de 0,1 à 1 micromètre, agissant comme barrière de diffusion de carbone.

2. Outil selon la revendication 1, caractérisé en ce que les nitrures métalliques sont des nitrures de titane.

3. Outil selon la revendication 1, caractérisé en ce que les oxydes métalliques sont des oxydes d'aluminium.

4. Outil selon la revendication 1, caractérisé en ce que les carbures métalliques sont des carbures de titane.
